Europäisches Patentamt

European Patent Office

Office européen des brevets

(19)

(11) **EP 1 005 192 A1**

(12) **DEMANDE DE BREVET EUROPEEN**

(43) Date de publication:
**31.05.2000 Bulletin 2000/22**

(51) Int Cl.⁷: **H04L 9/08**

(21) Numéro de dépôt: **99402880.1**

(22) Date de dépôt: **19.11.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **24.11.1998 FR 9814787**

(71) Demandeur: **THOMSON-CSF**
**75008 Paris (FR)**

(72) Inventeur: **Lehureau, Jean-Claude**
**94117 Arcueil Cedex (FR)**

(54) **Dispositif de cryptage quantique**

(57)  La présente invention concerne un dispositif de cryptage quantique.

Le dispositif comporte un émetteur (1) et un récepteur (2) entre lesquels une information cryptée est transmise. L'émetteur (1) comporte au moins des moyens (21, 23, 26, 28) pour envoyer un premier paquet de photons et un photon d'information vers le récepteur, l'apparition du photon d'information à la suite du paquet étant décalée d'un temps T selon une probabilité. L'émetteur comporte par ailleurs des moyens (27) de codage du photon d'information.

Le récepteur comporte au moins des moyens de codage d'un deuxième paquet de photons issu du premier paquet et décalé sensiblement du temps T par rapport à ce dernier, et des moyens d'interférence pour faire interférer un photon d'information avec le deuxième paquet de photons et fournissant un paquet de photon pour créer une quantité de photons sensiblement égale à ±2 fois la variance du bruit dû au deuxième paquet.

L'invention s'applique notamment pour la réalisation industrielle de systèmes de cryptage.

FIG.2a

EP 1 005 192 A1

# Description

La présente invention concerne un dispositif de cryptage quantique. Elle s'applique notamment pour la réalisation industrielle de systèmes de cryptage.

Il est connu de réaliser des lignes de transmission protégées contre l'écoute indiscrète en utilisant les propriétés de l'incertitude quantique. Un émetteur, nommé communément Alice, transmet un message à un récepteur, appelé communément Bob, sous la forme d'états quantiques discrets. Si un espion, que l'on nomme habituellement Eve, intercepte et mesure ces états, Alice et Bob peuvent vérifier sur une voie publique l'action introduite par la mesure d'Eve. De plus, par un jeu de bases diagonales aléatoires, on montre que le canal dont dispose Alice a posteriori, c'est-à-dire après transmission par une voie publique des bases utilisées à l'émission, a une capacité supérieure à la capacité dont dispose Eve a priori. En d'autres termes, le cryptage quantique joue sur l'impossibilité d'observation de deux personnes en partageant un code. On utilise donc un jeu quantique pour définir un code de cryptage en utilisant des propriétés de non observation qui se traduisent notamment par le fait qu'Alice ne peut pas partager le code avec Bob. Le cryptage quantique consiste notamment en l'émission d'informations par photons isolés sur lesquels est appliqué un codage. Un problème est notamment de pouvoir détecter ces photons isolés.

Les phénomènes quantiques utilisés sont généralement du domaine de l'optique, car c'est dans ce dernier que les phénomènes quantiques sont les plus observables. Ainsi, des systèmes utilisant pour état quantique la polarisation ou la phase d'un photon sur une ligne optique sont connus. De tels systèmes nécessitent un détecteur de très haute qualité de manière à avoir une chance raisonnable de détecter les photons uniques qui véhiculent les informations. Ces détecteurs sont complexes à réaliser et coûteux. En fait, ils ne sont pas adaptés à des applications industrielles et de masse telles que par exemple des transactions commerciales utilisant des canaux électroniques et/ou optiques. A titre d'exemple, une caméra à transfert de charge, dite habituellement CCD, du type grand public présente un niveau de bruit de l'ordre de 30 à 300 photons. Elle ne sait donc pas détecter quelques photons. En revanche, des caméras CCD de laboratoires, destinées par exemple à des applications astronomiques sont capables de réaliser des dissociations au niveau d'un photon, mais au prix de mises en oeuvre extrêmement complexes et coûteuses. En particulier, par construction les caméras CCD ne peuvent pas, ou peuvent très difficilement descendre au dessous d'un niveau de bruit dans la gamme des températures ambiantes. Cela peut facilement être démontré par quelques relations et grandeurs connues. Si l'on appelle Q la charge électrique minimale que peut détecter une caméra CCD et C la capacité de ses composants de détection, ces deux paramètres Q et C vérifient la relation suivante :

$$\frac{Q^2}{C} = kT \qquad (1)$$

où kT est sensiblement égale à $0,4.10^{-20}$ joules à température ambiante.

Par ailleurs, la capacité C est de l'ordre de $10^{-13}$ F, en conséquence la charge Q précitée vaut alors sensiblement $2.10^{-17}$ Cb, soit environ 120 fois $1,6.10^{-19}$ Cb, cette dernière charge correspondant à la charge électrique d'un photon. A température ambiante, un détecteur CCD ne peut pas détecter moins de 120 photons ou environ. La racine carrée du nombre de photons représente le bruit du détecteur. Il est possible bien sûr de diminuer ce bruit en complexifiant notamment la détection par des fonctions connues de corrélation. Cependant, le niveau de bruit restant est toujours nettement supérieur à quelques photons, à moins de passer à de très basses températures, ce qui n'est ni industriel, ni économique. D'autres types de détecteurs tels que par exemple des détecteurs à diodes PIN ou à diodes à avalanche présentent des caractéristiques de détection comparables.

Un but de l'invention est de permettre la réalisation d'un dispositif de cryptage quantique utilisant des détecteurs et des amplificateurs standards, donc peu coûteux et disponibles dans le commerce. A cet effet, l'invention a pour objet un dispositif de cryptage quantique comportant un émetteur et un récepteur entre lesquels une information cryptée est transmise, caractérisé en ce que l'émetteur comporte au moins :

- des moyens pour envoyer un paquet de photons et un photon d'information vers le récepteur, l'apparition du photon d'information suivant une loi de probabilité s et étant décalée du paquet d'un temps τ ;
- des moyens de codage du photon d'information ;

    et en ce que le récepteur comporte au moins :

- des moyens de codage d'un deuxième paquet de photons issu du premier paquet et décalé sensiblement du temps τ par rapport à ce dernier ;
- des moyens d'interférence pour faire interférer un photon d'information avec le deuxième paquet de photons et fournissant un paquet de photon pour créer une quantité de photons sensiblement égale à ±2 fois la variance σ du bruit dû au deuxième paquet.

L'invention a pour principaux avantages qu'elle s'adapte à plusieurs types de base de codage des informations, qu'elle s'adapte à tous types de liaisons optiques et qu'elle est simple à mettre en oeuvre.

D'autres caractéristiques et avantages de l'invention apparaîtront à l'aide de la description qui suit faite en regard de dessins annexés qui représentent :

- la figure 1, une illustration des éléments en présence lors d'une opération de transmission cryptée ;
- les figures 2a et 2b, des modes de réalisations possibles de l'émetteur et du récepteur d'un dispositif selon l'invention ;
- la figure 3, une illustration d'exemples de quantités de photons en jeu dans les voies directe et retardée de l'émetteur d'un dispositif selon l'invention ;
- la figure 4, une illustration d'exemples de quantités de photons en jeu dans les voies directe et retardée du récepteur d'un dispositif selon l'invention ;
- la figure 5, une illustration d'exemple de quantités de photons détectées en sortie d'un dispositif selon l'invention.

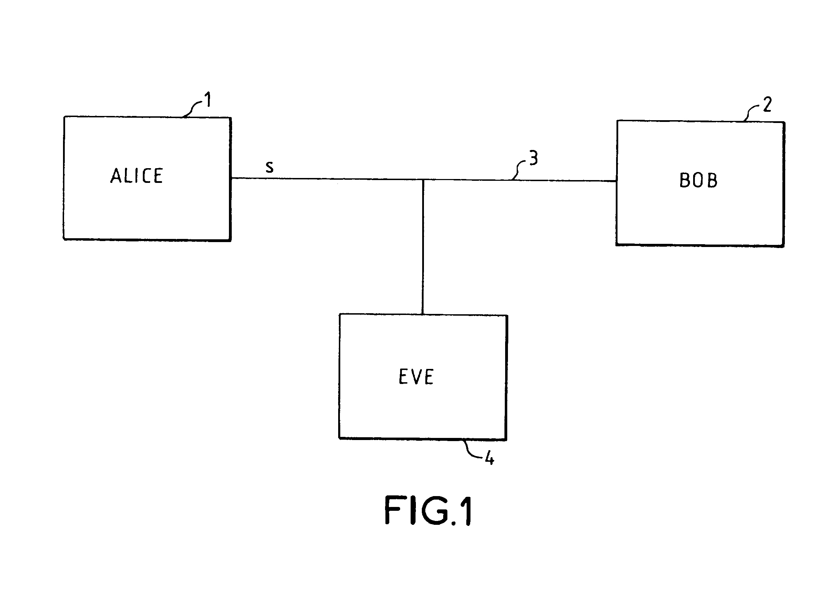

La figure 1 illustre les éléments en présence dans des opérations de transmission cryptée. Un des principes de cryptage quantique connu consiste notamment en l'envoi, par l'émetteur 1, Alice, de photons isolés soumis par exemple à un codage de phase suivant deux bases de codage diagonales, par exemple (0:0°, 1:180°) et (0:90°, 1:270°). Les messages sont décodés par le récepteur 2, Bob, de manière aléatoire suivant l'une ou l'autre des deux bases. Un message décodé suivant la bonne base, celle de l'émission, correspond à une corrélation totale, c'est-à-dire à un bit reçu. S'il est décodé suivant la base diagonale à la base d'émission, l'information reçue est nulle. Après émission du message, l'émetteur 1 transmet au récepteur 2 une information sur la suite des bases qu'il utilise. Le récepteur compare les bases d'émission aux bases de décodage et valide l'ensemble des bits décodés suivant la même base. Le récepteur doit vérifier qu'aucune information n'a été transmise sur les décodages qui apparaissent diagonaux entre l'émission et la réception. Cette vérification permet notamment de confirmer l'absence d'oreille indiscrète sur le canal 3 d'émission des messages. En effet, un dispositif espion 4, Eve, branché sur le canal 3, peut chercher à masquer sa présence en envoyant des informations supplémentaires et, ne sachant pas quelle base est utilisée par le récepteur 2, peut retransmettre correctement des informations générées à partir de la redondance de l'émission sans savoir qu'Alice 1 codait suivant une base diagonale un signal émis par Eve 4 et reçu par Bob 2.

Par la suite, la quantité de photons d'un signal transmis est notée s. Pour l'émission d'un bit de la part de l'émetteur 1, ce bit étant associé à un photon, s représente en fait la probabilité que ce bit contienne une information, s est donc inférieure à 1. Il a été montré précédemment combien il est difficile avec des moyens industriels et non coûteux de détecter la présence d'un photon. Pour permettre l'utilisation de moyens industriels, par exemple un détecteur à transfert de charges CCD à température ambiante, l'invention propose une solution qui permet de détecter les bits d'information à partir de la fluctuation d'un grand nombre de photons. Ce nombre de photon étant au moins supérieur au niveau de bruit des moyens de détection. A cet effet, selon l'invention, outre des moyens d'émission des photons véhiculant un signal codé, en faible quantité, l'émetteur 1 comporte des moyens d'émission d'une très grande quantité de photons, cette quantité étant notée $p^2$ par la suite et appelée paquet principal.

Le module de l'éclairement E reçu par le récepteur 2 est égal à la racine carrée du nombre de photons reçus. En d'autres termes,

$$E = \sqrt{p^2},$$

où $p^2$ représente le nombre de photons reçus. Pour additionner les éclairements reçus, d'une part des $p^2$ photons et d'autre part des s photons du signal d'information, et étant donné qu'il s'agit de nombres quadratiques, il faut utiliser la relation suivante :

$$|p + s|^2 = |p|^2 + |s|^2 + 2sp \qquad (2)$$

si le photon est en phase avec le paquet principal, ou :

$$|p - s|^2 = |p|^2 + |s|^2 - 2sp \qquad (3)$$

si le photon est en opposition de phase avec le paquet principal.

A titre d'exemple, on peut prendre $p^2 = 10^6$, en fait un nombre de photons $p^2$ inférieur, mais proche de la saturation d'un détecteur CCD. En présence d'informations s vaut 1, l'éclairement reçu est donc égal à $10^6 + 1 \pm 2000$. La fluctuation $\pm 2000$ est très supérieure au bruit d'un détecteur CCD classique à température ambiante, qui correspond par exemple à une quantité de l'ordre de 300 photons maximum par exemple. Il apparaît donc que le signal issu de l'arrivée d'un photon en phase ou en opposition de phase est égal à $\pm 2$ fois la variance du bruit dû à l'arrivée du paquet principal. En particulier, si l'on s'intéresse au rapport signal à bruit, en considérant cette fluctuation, c'est-à-dire $\pm 2sp$, il faut prendre en compte le bruit apporté par les $p^2$ photons qui est un bruit de type Shottky dont la valeur correspond à p. Le rapport signal sur bruit $\frac{S}{B}$ est alors donné par la relation suivante :

$$\frac{S}{B} = \frac{2sp}{\sqrt{b^2 + p^2}} \qquad (4)$$

où b représente le bruit du détecteur. Il est alors toujours possible d'augmenter la valeur de p, c'est-à-dire du nombre $p^2$ de photons émis, pour rendre $b^2$ négligeable devant $p^2$. Dans ce cas :

$$\frac{S}{B} = \frac{2sp}{p} = 2s \qquad (5)$$

En cas de signal, où s=1, le rapport signal à bruit est tel qu'une détection est possible. En particulier, en se considérant les nombres de photons, c'est-à-dire :

$$\frac{S^2}{B^2} = 4s^2 \qquad (6)$$

Ce qui signifie notamment que l'amplitude d'un signal à la réception d'un photon est supérieur de 6 dB à l'amplitude du bruit Shottky.

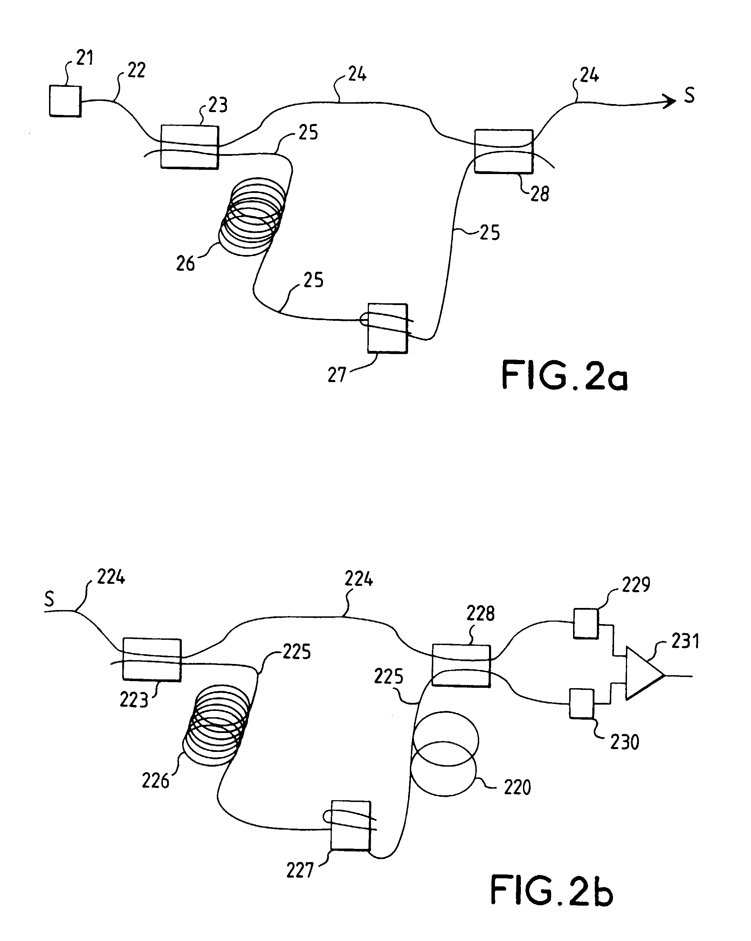

Les figures 2a et 2b illustrent un mode de réalisation possible d'un dispositif selon l'invention. La figure 2a présente un exemple de réalisation de l'émetteur 1 et la figure 2b présente un exemple de réalisation du récepteur 2. Conformément à ce qui est indiqué précédemment, l'émetteur 1 comporte des moyens pour envoyer un paquet de photons pour permettre au récepteur 2 de visualiser un photon unique. En terme de lumière, ce photon correspond à une lumière réduite à un niveau quantique à laquelle on associe un paquet de lumière de forte puissance et cohérent. Par ailleurs, on associe par exemple à ce niveau très faible de lumière, cet unique photon, deux bases diagonales de codage de l'information, sachant qu'un photon véhicule un bit. A cet effet, l'émetteur 1 comporte par exemple un laser 21 générateur d'impulsions lumineuses cohérentes. La qualité de cohérence signifie par exemple que la bande d'émission ayant une largeur B et une impulsion ayant une durée T, le terme BT est sensiblement égal à 1 ou de l'ordre de 1. Plus généralement, cela signifie que la bande passante de l'émetteur est liée à la faible largeur d'une impulsion, qui peut être par exemple de l'ordre de 1ns, la bande passante étant alors de l'ordre de 1GHz. Les signaux sont émis par une liaison optique 22 qui peut être par exemple une fibre optique. Pour des raisons de facilité de description, il sera considéré par la suite que cette liaison est une fibre optique. Le laser 21 émet un très grand nombre de photons, il émet par exemple un paquet comprenant de l'ordre de $10^8$ photons, relativement à chaque bit émis, que celui-ci contienne ou non de l'information. Toujours pour des facilités de description, il sera considéré par la suite que le laser 21 émet $10^8$ photons.

L'émetteur 1 comporte un premier coupleur 23, par exemple à très faible couplage, dans lequel rentre le paquet de photons émis par le laser 21. Une première fibre optique 24 sort du coupleur 23. Cette fibre 24 est par exemple la même que celle 22 qui entre. Cette fibre optique 24 comporte la quasi-totalité des photons entrant. On peut donc toujours considérer qu'elle comporte toujours de l'ordre de $10^8$ photons. Une deuxième fibre optique 25 sort du coupleur 23. Le couplage de cette fibre 25 avec la première 22, 24 est par exemple obtenu en torsadant les deux fibres entre elles. La deuxième fibre optique 25 ne comporte que quelques photons. Cette fibre 25 comporte par exemple des moyens de retard 26. Ces moyens 26 sont destinés à décaler d'un temps donné les quelques photons de la fibre 25 par rapport au paquet de photons de la première fibre 24. Le retard est par exemple de l'ordre de la durée d'une ou quelques impulsions lumineuses, donc par exemple de l'ordre d'une à quelques dizaines de nanosecondes. Les moyens de retard 26 sont par exemple réalisés par un enroulement ou bobinage de la deuxième fibre 25 pour allonger sa longueur de quelques mètres par rapport à la première fibre 24. La deuxième fibre optique 25 parcourt par exemple ensuite un modulateur de phase 27. Ce modulateur code la phase des photons selon l'une ou l'autre des deux bases diagonales. S'il code un photon selon la première base (0°, 180°), la phase du photon prend la valeur 0° ou 180°. S'il code un photon selon la deuxième base (90°, 270°), la phase du photon prend la valeur 90° ou 270°. En d'autres termes deux photons sont codés selon la même base s'ils ont entre eux un décalage de 0° modulo 180° et sont codés selon des bases diagonales s'ils ont entre eux un déphasage de 90° modulo 180°. Le codage est réalisé de façon aléatoire. A cet effet, l'émetteur comporte des moyens de commande aléatoire du modulateur. Ces moyens génèrent par exemple des mots numériques aléatoires. Ces derniers sont mémorisés par des moyens de mémorisation afin d'être transmis au récepteur 2. La transmission de ces codes au récepteur peut être réalisée par des moyens optiques, par exemple par la même liaison que celle qui transmet les photons, ou par tout autre moyen, par exemple hertzien. Le modulateur de phase 27 est par exemple un petit cylindre piézo-électrique autour duquel est bobinée la fibre optique 25.

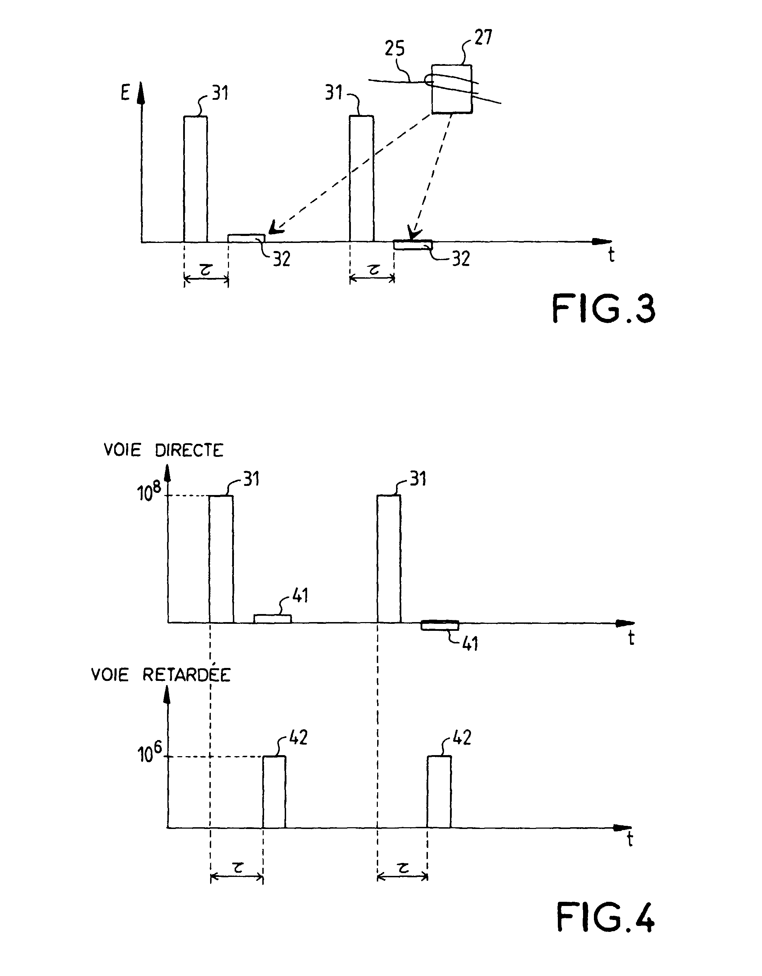

La figure 3 illustre à titre d'exemple, l'effet produit par les moyens de retard 26 ainsi que celui produit par le modulateur de phase 27. Les quantités de photons 31, 32 respectivement transportés sur la première fibre optique 24 et sur la deuxième fibre optique 25 sont représentés dans un système d'axes, l'axe des ordonnées représentant les quantités de photons ou l'amplitude lumineuse E, et l'axe des abscisses représentant le temps t. Le retard $\tau$ entre le paquet de photons 31, transporté par la première fibre optique 24, et les quelques photons 32, transportés par la deuxième fibre optique 25, permet de distinguer ces derniers du paquet 31. Par ailleurs, un premier ensemble de quelques photons 32 est codé selon une première base et un deuxième ensemble de quelques photons 32 est codé selon la base diagonale, et présente donc une amplitude en opposition de phase avec l'ensemble précédent, ce qui est notamment caractérisé par le fait, sur la figure 3, que les deux ensembles 32 sont d'un côté et de l'autre de l'axe des abscisses.

En sortie du modulateur 27, la deuxième fibre optique 25 est une nouvelle fois couplée à la première fibre optique 24 au moyen d'un deuxième coupleur 28, par exemple de très faible couplage. La fibre de sortie du deuxième coupleur est par exemple toujours la première fibre optique 22, 24. Etant donné le très faible couplage, elle comporte toujours le paquet de l'ordre de $10^8$ photons et, retardé du retard $\tau$, elle comporte une fraction de photon, c'est-à-dire en fait par exemple une probabilité s inférieure à 1, par exemple de 10%, de comporter un photon. Pour arriver à ce taux de probabilité en partant du paquet principal fourni par le laser 21, les deux coupleurs ont par exemple des taux de couplage de l'ordre de 1/30 000. La liaison constituée de la première fibre optique 24 peut être appelée voie directe de l'émetteur alors que la liaison constituée de la deuxième fibre optique 25 peut être appelée voie retardée. Le signal en sortie de l'émetteur, c'est-à-dire en fait par exemple en sortie du deuxième coupleur, peut encore être représenté par la figure 3, où le gros paquet de photons 31 est par exemple de l'ordre de $10^8$ et où, retardé de $\tau$, il n'y a plus quelques photons, mais une « fraction de photon », c'est-à-dire en fait une probabilité d'existences de photons, par exemple de l'ordre de 10%. En effet, comme l'illustre la figure 2a , il apparaît bien que l'impulsion retardée est modulée en phase puis réinjectée dans la voie directe 24 par le deuxième coupleur 28 à très faible coefficient de couplage, par exemple comme indiqué précédemment. De ce fait, l'impulsion retardée en sortie de l'émetteur a une énergie moyenne très inférieure à celle d'un photon. Le niveau d'atténuation de l'impulsion retardée est donc tel que la probabilité de présence de deux photons dans cette impulsion est très petite.

De préférence, comme cela a été décrit précédemment, la voie retardée 25 réalise des codages en jouant sur la phase, en particulier parce que l'existence d'un photon est du point de vue quantique associé à sa phase. Cependant, il est possible de prévoir des moyens de codage selon des bases diagonales qui jouent sur d'autres paramètres, notamment sur la polarisation. Deux photons sont alors codés selon des bases diagonales si leurs polarisations sont orthogonales. Dans ce cas, le modulateur de phase 27 est remplacé par exemple par un polariseur, qui polarise les photons selon l'une ou l'autre des bases de polarisation (0:H , 1: V) et (0:$\sigma^+$,1: $\sigma^-$), où H, V, $\sigma^+$ et $\sigma^-$ représentent respectivement les polarisations horizontale, verticale, circulaire gauche et circulaire droite.

La figure 2b présente un mode de réalisation possible de la partie réception 2 d'un dispositif selon l'invention. Le signal S reçu par le récepteur 2 est le signal transmis S par l'émetteur. Ce signal S comporte un gros paquet de photons, par exemple de l'ordre de $10^8$ et éventuellement un photon, contenant un bit d'information, retardé de $\tau$. La liaison entre l'émetteur 1 et le récepteur 2 est une liaison optique, constituée par exemple d'une ou de plusieurs fibres optiques en série. Le signal S pénètre dans le récepteur 2 par exemple par une fibre optique 224, qui est par exemple la même fibre optique que celle 24 qui sort de l'émetteur. Le récepteur est décrit par la suite avec des liaisons à fibres optiques, cependant, d'autres liaisons optiques peuvent être envisagées. Le récepteur comporte un premier coupleur 223, à faible couplage, par exemple de l'ordre de 1/100. Ce coupleur est par exemple réalisé de façon analogue à celle des coupleurs 23, 28 de l'émetteur. Le coupleur 223 couple la première fibre optique 224 avec une deuxième fibre 225. Le couplage entre ces deux fibres étant plus important que ceux effectués entre les fibres optiques de l'émetteur, elles sont par exemple torsadées entre elles sur une plus grande longueur. L'essentiel de l'intensité des impulsions lumineuses reçues est cependant transmise à un deuxième coupleur 228, un coupleur 50/50, relié en sortie du premier coupleur 223, par exemple par l'intermédiaire de la fibre entrante 224. Cette liaison entre le premier coupleur 223 et le deuxième coupleur 228 est appelée voie directe du récepteur. Une part très faible des impulsions lumineuses reçues est dérivée dans la deuxième fibre optique 225, appelée voie retardée du récepteur.

La voie retardée 225 comporte des moyens de retard 226 réalisés par exemple de la même façon que ceux de l'émetteur et produisant sensiblement le même retard $\tau$. La voie retardée véhicule une faible partie d'un signal entrant dans le récepteur, cependant, le coefficient de couplage du coupleur 223 est nettement plus élevé que celui des coupleurs 23, 28 de l'émetteur, de sorte que la quantité de photons qui transite par cette voie retardée est relativement importante pour constituer un paquet de photons, par exemple de l'ordre du million d'unités. En sortie des moyens de retard 226, la voie retardée comporte un modulateur de phase 227 qui réalise un codage de phase des paquets de photons sur les deux bases diagonales précitées, mais produit par exemple seulement des déphasages de 0° et 90°, notamment pour placer la phase de détection à 0° ou 90°. Ces phases sont par exemple générées par un signal aléatoire linéaire lui-même généré par des moyens présents dans le récepteur et non représentés. En sortie de modulateur 227, la voie retardée comporte par exemple des moyens 220 de restitution de la polarisation. En effet, dans une fibre optique, il se peut que les polarisations des ondes fluctuent en fonction de la température, d'où l'intérêt éventuel des moyens de restitution de la polarisation qui permettent en fait de maximiser le contraste des interférences entre la voie directe et la voie retardée. En sortie des moyens de restitution, la deuxième fibre 225 entre dans le deuxième coupleur 228. Ce dernier est par exemple relié en sortie à deux détecteurs, l'entrée d'un premier détecteur 229 étant reliée à la voie directe 224 et l'entrée d'un deuxième détecteur 230 étant par exemple reliée à la voie retardée 225. Ces détecteurs sont par exemple reliés aux fibres optiques des voies directes et retardées. Le modulateur 227 est par exemple réalisé de la même façon que celui 27 de l'émetteur.

La figure 4 illustre, dans un premier système d'axes analogues à ceux de la figure 3, le bilan des signaux présents à l'entrée du deuxième coupleur 228, le coupleur 50/50. Etant donné le faible coefficient de couplage du premier coupleur 223 du récepteur, ce bilan est sensiblement le même que le bilan des signaux à l'entrée de ce premier coupleur, c'est-à-dire en fait le bilan en sortie de l'émetteur. Sur la voie directe 224 apparaît donc le gros paquet de photons 31, ou plus précisément une succession de gros paquets 31, déjà illustrés par la figure 3. Pour faciliter la description, des grandeurs ont été fixées à titre d'exemple. Ainsi, le gros paquet 31 comporte de l'ordre $10^8$ photons. La voie directe comporte par ailleurs, retardée de $\tau$ par rapport aux gros paquets 31, les impulsions retardées 41, dont le niveau par rapport à l'impulsion 32 de la voie retardée 25 de l'émetteur est encore diminuée, notamment par le deuxième coupleur 28 de l'émetteur. Comme il a été indiqué précédemment, une impulsion retardée a par exemple une probabilité d'apparition s de l'ordre de 10%.

Dans un deuxième système d'axes analogue aux précédents, la figure 4 représente le bilan des signaux de la voie retardée 225 du récepteur, à l'entrée du deuxième coupleur. Cette voie comporte des paquets de photons 42, retardés de $\tau$ par rapport aux gros paquets 31. Pour fixer les idées, étant donné que le coefficient de couplage du premier coupleur 223 du récepteur est par exemple de 1/100, les paquets 42 présents sur la voie retardée comportent par exemple $10^6$ photons. Les impulsions retardées 41, qui sont en fait les photons d'information à une probabilité s près, peuvent être en opposition de phase d'une récurrence à l'autre selon leurs codages, comme les impulsions 32 de la voie retardée de l'émetteur. C'est la raison pour laquelle, deux photons d'information 41 successifs sont représentés de chaque côté de l'axe des abscisses sur la figure 4. Les gros paquets 42 possèdent le même retard $\tau$ que les photons d'information 41 par rapport aux gros paquets 31. De la sorte, le deuxième coupleur 228, c'est-à-dire le coupleur 50/50, fait interférer un photon d'information 41 passant par la voie directe avec un paquet de photons 42 passant par la voie retardée. Le coupleur 50/50 peut être remplacé par un autre type d'interféromètre ou de moyens d'interférence.

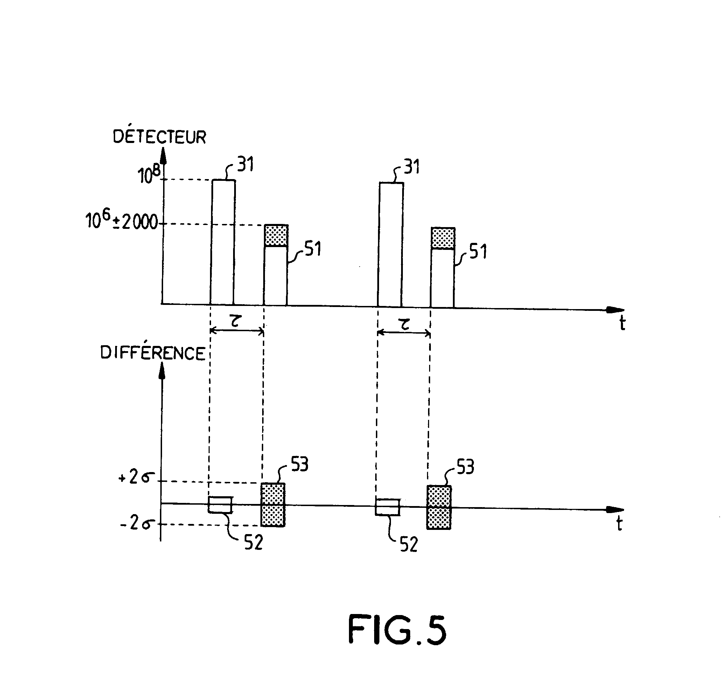

La figure 5 illustre, dans un premier système d'axes analogues aux précédents, les signaux à l'entrée d'un détecteur 229, 230 placé en sortie du coupleur 50/50. Un détecteur reçoit les signaux de la voie directe, c'est-à-dire les gros paquets 31 suivis des photons d'information qui interfèrent avec le paquet 42 de la voie retardée. L'interférence d'un photon d'information 41 avec un paquet 42 de la voie retardée donne, retardé de $\tau$ par rapport à un gros paquet 31, une quantité 51 de photons établie conformément aux relations (2) et (3) précédentes. En restant avec les grandeurs fixées précédemment à titre d'exemple, la quantité de photons présents sur la deuxième entrée du détecteur 229 est donc sensiblement égale à $10^6 \pm 2000$. Plus généralement, la quantité de photons présents sur cette deuxième entrée est sensiblement égale à la quantité de photons du paquet 42 de la voie retardée 225 $\pm$ 2 fois la variance $\sigma$ du bruit dû à l'arrivée de ce paquet. Cette interférence amplifie donc considérablement le signal d'un photon d'information en créant une quantité de photons égale à $\pm$ 2 fois la variance $\sigma$. Un détecteur 229, 230 peut être un détecteur CCD classique, ou encore un détecteur à diodes PIN ou à diodes à avalanche connu par ailleurs, fonctionnant à température ambiante, peu coûteux et disponible dans le commerce. La détection peut donc se faire de façon économique et industrielle.

Des moyens 231 réalisent par exemple la différence entre les signaux des deux détecteurs, de telle sorte qu'ils délivrent des quantités de photons telles qu'illustrées dans le deuxième système d'axes de la figure 5, en ne laissant apparaître notamment que les photons liés à la variance $\sigma$, aux photons issus des gros paquets près. De la différence entre les gros paquets de photons, il résulte quelques centaines de photons 51 correspondant au bruit des détecteurs. En ce qui concerne les photons d'information, si aucun photon n'a été émis, ce qui est en fait la situation la plus probable, le nombre de photons détectés sur la voie de différence est nul. Toutefois, le bruit Shottky sur chacun des détecteurs 229, 230 génère un signal dont la variance est $\sigma$. Lorsqu'un photon est émis mais détecté suivant une quadrature de phase, c'est-à-dire selon le code 90° ou 270°, la répartition de signal n'est pas affectée. Lorsqu'un photon est reçu en phase ou en opposition de phase, la quantité 53 de photons est décalée d'une valeur de $\pm$2 $\sigma$. Le codage d'un photon est en fait réalisé une première fois par les moyens de codage 27 de l'émetteur, puis une deuxième fois par les moyens de codage 227 du récepteur qui codent le paquet retardé 42 et donc le photon d'information, par l'action de l'interférence du coupleur 50/50. Des moyens de comparaison, non représentés et placés en sortie des moyens de différence 231, comportent par exemple deux seuils $\pm S_0$ pour permettre de définir de manière arbitraire qu'un signal a été reçu. Ce seuil est par exemple ajusté pour maximiser l'entropie du canal de transmission entre l'émetteur et le récepteur. En d'autres termes, plus la probabilité d'émission d'un photon d'information est faible, plus le seuil $S_0$ doit être élevé de manière à minimiser les erreurs dues à la croyance d'une réception alors que rien est émis. De même, l'augmentation du seuil agit négativement en réduisant le nombre de photons émis et réellement détectés. L'émetteur, Alice, et le récepteur, Bob, ont mémorisé les bases suivant lesquelles les signaux ont été émis et détectés. Bob, de plus, mémorise les situations où le nombre de photons détectés est supérieur au seuil $\pm S_0$ ainsi que le signe du dépassement. Dans une seconde phase, Alice transmet à Bob la base, par exemple de phase, suivant laquelle les signaux ont été transmis. Bob repère alors les signaux qui ont donné lieu à une détection et qui ont été transmis et reçus suivant la même base.

L'invention a été illustrée avec des bases de codages en phase, elle peut cependant s'adapter avantageusement à tous types de bases de codage. De même, elle s'adapte à tous types de liaisons optiques, dans une mise en oeuvre simple.

## Revendications

1. Dispositif de cryptage quantique comportant un émetteur (1) et un récepteur (2) entre lesquels une information cryptée est transmise, caractérisé en ce que l'émetteur (1) comporte au moins :

   - des moyens (21, 23, 26, 28) pour envoyer un premier paquet de photons (31) et un photon d'information (32) vers le récepteur, l'apparition du photon d'information suivant une loi de probabilité s et étant décalée du paquet d'un temps τ ;
   - des moyens de codage (27) du photon d'information ;

   et en ce que le récepteur (2) comporte au moins :

   - des moyens de codage (227) d'un deuxième paquet de photons (42) issu du premier paquet (31) et décalé sensiblement du temps τ par rapport à ce dernier ;
   - des moyens d'interférence (228) pour faire interférer un photon d'information (41) avec le deuxième paquet de photons (42) et fournissant un paquet de photons pour créer une quantité de photons sensiblement égale à ±2 fois la variance (σ) du bruit dû au deuxième paquet.

2. Dispositif selon la revendication 1, caractérisé en ce que l'émetteur (1) comporte :

   - un laser (21) générant le premier paquet de photons (31) ;
   - un premier coupleur (23) dans lequel entre le paquet de photons ;
   - un deuxième coupleur (28) relié par une première entrée et par une voie optique directe (24) à une sortie du premier coupleur et recevant la plus grande partie du signal d'entrée de ce dernier ;
   - une voie retardée (25) reliant la deuxième sortie du premier coupleur (23) à la deuxième entrée du deuxième coupleur (28), cette voie retardée comportant des moyens (26) pour créer le retard τ et les moyens de codage (27), ces moyens codant des photons (32) transitant par cette voie retardée, une sortie du deuxième coupleur fournissant le signal (S) à émettre vers le récepteur (2).

3. Dispositif selon la revendication 2, caractérisé en ce que les coupleurs (23, 28) ont un très faible coefficient de couplage.

4. Dispositif selon l'une quelconque des revendications 2 ou 3, caractérisé en ce que les moyens de codage (27) réalisent un codage en phase selon deux bases diagonales, une base (0°, 180°) et une base (90°, 270°)

5. Dispositif selon l'une quelconque des revendications 2 à 4, caractérisé en ce que la voie optique directe (24) est une fibre optique.

6. Dispositif selon l'une quelconque des revendications 2 à 5, caractérisé en ce que la voie optique retardée (25) comporte une fibre optique.

7. Dispositif selon l'une quelconque des revendications précédentes, caractérisé en ce que le récepteur (2) comporte :

   - un premier coupleur (223) recevant le signal (S) envoyé par l'émetteur (1) ;
   - un interféromètre (228) relié par une première entrée et par une voie optique directe (224) à une sortie du premier coupleur et recevant la plus grande partie du signal d'entrée de ce dernier ;
   - une voie retardée (225) reliant la deuxième sortie du premier coupleur (223) à la deuxième entrée de l'interféromètre (228), cette voie retardée comportant des moyens (226) pour créer le retard τ et des moyens de codage des photons (32) transitant par cette voie retardée ;
   - au moins un détecteur (229) relié en sortie de l'interféromètre.

8. Dispositif selon la revendication 7, caractérisé en ce que le premier coupleur a un coefficient de couplage supérieur aux coefficients de couplages des coupleurs (23, 28) de l'émetteur.

9. Dispositif selon l'une quelconque des revendications 7 ou 8, caractérisé en ce que les moyens de codage (227) réalisent un codage en phase selon 0° ou 90°.

10. Dispositif selon l'une quelconque des revendications 7 à 9, caractérisé en ce que la voie optique directe (224) est une fibre optique.

11. Dispositif selon l'une quelconque des revendications 7 à 10, caractérisé en ce que la voie optique retardée (225) comporte une fibre optique.

12. Dispositif selon l'une quelconque des revendications 7 à 11, caractérisé en ce que la voie retardée comporte, en sortie des moyens de codage (227), des moyens de restitution de la polarisation (220).

13. Dispositif selon l'une quelconque des revendications 2 à 12, caractérisé en ce que les moyens de retard (26, 226) comportent un enroulement de fibre optique (25, 225).

14. Dispositif selon l'une quelconque des revendications 2 à 13, caractérisé en ce que les moyens de codage (27, 227) comportent un modulateur de phase comprenant un petit cylindre piézo-électrique autour duquel est bobinée une fibre optique (25, 225).

15. Dispositif selon l'une quelconque des revendications précédentes, caractérisé en ce qu'il comporte :

    - deux détecteurs placés en sortie des moyens d'interférence (228), l'entrée d'un premier détecteur (229) étant reliée à la voie directe (224) et l'entrée d'un deuxième détecteur (230) étant par exemple reliée à la voie retardée (225) ;
    - des moyens (231) pour faire la différence entre les sorties des deux détecteurs et ne laisser apparaître que les photons liés à la variance ($\sigma$).

16. Dispositif selon l'une quelconque des revendications précédentes, caractérisé en ce qu'un détecteur (229, 130) est un détecteur fonctionnant à température ambiante.

FIG.1

ALICE
BOB
EVE

FIG.2a

FIG.2b

FIG.3

FIG.4

FIG.5

Office européen
des brevets

**RAPPORT DE RECHERCHE EUROPEENNE**

Numéro de la demande

EP 99 40 2880

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | TOWNSEND P D ET AL: "SINGLE PHOTON INTERFERENCE IN 10 KM LONG OPTICAL FIBRE INTERFEROMETER"<br>ELECTRONICS LETTERS,<br>vol. 29, no. 7, 1 avril 1993 (1993-04-01),<br>pages 634-635, XP000361197<br>ISSN: 0013-5194<br>* le document en entier * | 1-14 | H04L9/08 |
| A | WO 95 07584 A (BRITISH TELECOMM ;BLOW KEITH JAMES (GB))<br>16 mars 1995 (1995-03-16)<br>* abrégé *<br>* page 3, ligne 14 - ligne 36 *<br>* page 9, ligne 14 - ligne 33 *<br>* revendications 1,2 *<br>* figures 3,5A,5B * | 1-15 | |
| A | MULLER A ET AL: "EXPERIMENTAL DEMONSTRATION OF QUANTUM CRYPTOGRAPHY USING POLARIZED PHOTONS IN OPTICAL FIBRE OVER MORE THAN 1 KM"<br>EUROPHYSICS LETTERS,<br>vol. 23, no. 6, 20 août 1993 (1993-08-20),<br>pages 383-388, XP000672073<br>ISSN: 0295-5075<br>* page 1 *<br>* page 2, ligne 13 - ligne 30 *<br>* page 4, alinéa 3 - page 6, alinéa 4 *<br>* figures 1,3 * | 1,2,7 | **DOMAINES TECHNIQUES RECHERCHES (Int.Cl.7)**<br><br>H04L |

Le présent rapport a été établi pour toutes les revendications

| Lieu de la recherche | Date d'achèvement de la recherche | Examinateur |
|---|---|---|
| LA HAYE | 29 février 2000 | Gautier, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 2880

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

29-02-2000

| Document brevet cité au rapport de recherche | Date de publication | Membre(s) de la famille de brevet(s) | | Date de publication |
|---|---|---|---|---|
| WO 9507584 A | 16-03-1995 | AU | 674198 B | 12-12-1996 |
| | | AU | 5709994 A | 19-07-1994 |
| | | AU | 678848 B | 12-06-1997 |
| | | AU | 7543894 A | 27-03-1995 |
| | | AU | 693109 B | 25-06-1998 |
| | | AU | 7543994 A | 27-03-1995 |
| | | AU | 678049 B | 15-05-1997 |
| | | AU | 7544094 A | 27-03-1995 |
| | | AU | 691197 B | 14-05-1998 |
| | | AU | 7544194 A | 27-03-1995 |
| | | CA | 2152628 A,C | 07-07-1994 |
| | | CA | 2168851 A | 16-03-1995 |
| | | CA | 2169746 A | 16-03-1995 |
| | | DE | 69309496 D | 07-05-1997 |
| | | DE | 69309496 T | 07-08-1997 |
| | | DE | 69408152 D | 26-02-1998 |
| | | DE | 69408152 T | 14-05-1998 |
| | | DE | 69414864 D | 07-01-1999 |
| | | DE | 69414864 T | 12-05-1999 |
| | | DE | 69415815 D | 18-02-1999 |
| | | DE | 69415815 T | 27-05-1999 |
| | | EP | 0676110 A | 11-10-1995 |
| | | EP | 0717895 A | 26-06-1996 |
| | | EP | 0717896 A | 26-06-1996 |
| | | EP | 0717897 A | 26-06-1996 |
| | | EP | 0739559 A | 30-10-1996 |
| | | ES | 2101495 T | 01-07-1997 |
| | | ES | 2126143 T | 16-03-1999 |
| | | ES | 2128579 T | 16-05-1999 |
| | | ES | 2111950 T | 16-03-1998 |
| | | WO | 9415422 A | 07-07-1994 |
| | | WO | 9507582 A | 16-03-1995 |
| | | WO | 9507583 A | 16-03-1995 |
| | | WO | 9507585 A | 16-03-1995 |
| | | HK | 113097 A | 29-08-1997 |
| | | HK | 1008766 A | 14-05-1999 |
| | | JP | 9502320 T | 04-03-1997 |
| | | JP | 9502321 T | 04-03-1997 |
| | | JP | 2951408 B | 20-09-1999 |
| | | JP | 9502322 T | 04-03-1997 |
| | | JP | 9502323 T | 04-03-1997 |
| | | JP | 8505019 T | 28-05-1996 |
| | | US | 5675648 A | 07-10-1997 |
| | | US | 5768378 A | 16-06-1998 |
| | | US | 5850441 A | 15-12-1998 |
| | | US | 5764765 A | 09-06-1998 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**     EP 99 40 2880

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

29-02-2000

| Document brevet cité au rapport de recherche | Date de publication | Membre(s) de la famille de brevet(s) | Date de publication |
|---|---|---|---|
| WO 9507584 A | | US 5757912 A<br>AU 5152393 A | 26-05-1998<br>26-04-1994 |

Pour tout renseignement concernant cette annexe : voir Journal Officiel de l'Office européen des brevets, No.12/82

EPO FORM P0460